# EUROPEAN PATENT APPLICATION

(11) **EP 4 480 798 A1**
(43) Date of publication of application: **25.12.2024**
(21) Application number: 23180314.9
(22) Date of filing: 20.06.2023
(51) Int. Cl.: B62J 6/04, B62J 6/20, B62K 27/00, F21V 8/00

(54) **BIKE TRAILER WITH ILLUMINATION ARRANGEMENT**

(71) Applicant: Thule Sweden AB, 335 04 Hillerstorp (SE)
(72) Inventor: FERMAN, Magnus, 33154 Värnamo (SE); LILJA, Dan, 51294 Svenljunga (SE)
(74) Representative: Wallentin, Lars

(57) **Abstract**

The present invention relates a bike trailer (10) comprising an illumination arrangement. The rear illumination arrangement comprises an elongated light emission element (30) and a prism (32) arranged to be illuminated by light emitted from the elongated light emission element (30). The invention further relates to an illumination arrangement for a bike trailer.

## Description

### TECHNICAL FIELD

The present invention relates to a bike trailer with an illumination arrangement. Further, the invention relates to an illumination arrangement.

### PRIOR ART

Bike trailers may be used to comfortably transport cargo, animals, little children or even infants. For example, a bike trailer may be configured as a child carrier in which a young child can be seated. A user may also push or pull the child carrier. When pulled by a bike, the bike trailer is moved on streets also frequented by vehicles.

During conditions with reduced visibility, such as at night, safety may be increased by proper illumination of the bike trailer. For example, the bike trailer can have active light sources and/or reflecting elements so that it will be easily noticed by other traffic participants. For example, the bike trailer should be visibly illuminated not only from the rear, but also from the sides, to ensure perception by other traffic participants in intersections and/or when turning. Moreover, a person pushing the bike trailer may block light sources and/or reflectors depending on their position.

### SUMMARY OF THE INVENTION

A first aspect relates to a bike trailer. The bike trailer may comprise several wheels to allow the bike trailer to roll over the ground. The bike trailer may be configured as a child carrier, such as a stroller. The bike trailer may comprise a suspension. The bike trailer may comprise one front wheel and several back wheels, such as two back wheels. In another configuration the bike trailer comprises two or more front wheels or has no front wheels. A front side of the bike trailer may comprise a bar and/or other attachment means for attaching the bike trailer to a bike, such as to a rear hub, bicycle frame or bicycle seat post. The bike trailer may comprise a receptacle for an infant or small child, such as a child seat or bed. The bike trailer may additionally or alternatively comprise a receptacle for cargo and/or an animal. The receptacle may be fully or partially covered, such as by a textile hood. The bike trailer may comprise a handle for pushing and/or pulling the bike trailer when not pulled by a bicycle. A child carrier may be configured for use by a jogger and/or for being pulled by a bicycle. A child carrier may be adjusted for use as a trailer for a bike. The bike trailer may also be adjustable between different configurations, such as between a bike trailer configuration and a stroller configuration. For example, during use as a bike trailer, front wheels of the bike trailer may be removed or moved out of contact with the ground. When used as a stroller, the front wheels may be reattached or moved into contact with the ground. The bike trailer may comprise a frame, for example connecting the child seat to the wheels and the grip. The frame may form a front fork to which the front wheel and/or attachment means for being pulled by the bike are attached. The bike trailer may also be collapsible for storage and/or transport in a vehicle. The invention also relates to a child carrier. That child carrier can be configured like the bike trailer described herein. The child carrier may only be useable in a walking mode, for example being configured as a stroller. The child carrier may also be adjustable into a bike trailer configuration.

The bike trailer may comprise an illumination arrangement. The illumination arrangement may be configured as a rear illumination arrangement. The rear illumination arrangement may be configured to illuminate a rear of the bike trailer. The illumination arrangement may also be configured as a front illumination arrangement. For example, the front illumination arrangement may illuminate the bike trailer and the bicycle. The front illumination arrangement may also be configured to illuminate a path in addition to a front light of the bicycle. A rear side of the bike trailer may be facing away from a bike to which the bike trailer is attached and/or towards a person pushing the bike trailer in front of him. The rear side may be adjacent to a head of a child seated in the bike trailer. The rear side of the bike trailer may be higher than a front side. The front side may have an access opening for the child receptacle, unlike the rear side. The illumination arrangement may be configured to illuminate a rear or front of the bike trailer in a way that is also visible from the sides of the bike trailer, at least up to a certain angle. The illumination arrangement may comprise active light sources, such LEDs and/or light bulbs. The illumination arrangement may comprise elements that, when powered, emit light, in particular in the visible spectrum. Alternatively or additionally, the illumination arrangement may be configured to reflect light, in particular more than other components of the bike trailer. For example, the illumination arrangement may be configured to passively illuminate the rear of the bike trailer. Such a passive illumination may occur when light emitted from an external light source, such as the headlights of a vehicle, hit the bike trailer. For this purpose, the illumination arrangement may comprise, for example, at least one reflector or other element with a higher reflectivity than surrounding material of the bike trailer. A reflector may, for example, be configured to reflect light in a directed manner back to its source.

The illumination arrangement comprises an elongated light emission element. The elongated light emission element may be configured to emit light along its length at least on one side and/or in one direction, either continuously or in discrete spots. For example, the elongated light emission element may only or primarily emit light rearwards. The elongated light emission element may, for example, be straight or curved. The elongated light emission element may also form a loop, a letter, a number or some other form of symbol. The elongated light emission element may generate the light it emits, or it may conduct the light it emits from another source, such as an active light source. The active light source may be arranged adjacent the elongated light emission element and/or may emit light into the elongated light emission element. The elongated light emission element may have a longitudinal extension.

The illumination arrangement comprises a prism. The prism may be a transparent optical element that is configured to refract light. One of the surfaces of the prism may be angled with respect to other surfaces. The prism may redirect light entering its body from one side to other sides of its body. The prism may be configured as a light transmitting part, for example made from transparent clear or colored plastic.

The prism is arranged to be illuminated by light emitted from the elongated light emission element. For example, the prism may be arranged on and/or adjacent to a surface of the elongated light emission element that emits light when the illumination arrangement is in use, such as when a light source is powered on. For example, the prism is arranged on a rear side of the elongated light emission element or at an axial end of the elongated light emission element. The rear side of the elongated light emission element may face rearwards in the bike trailer. The axial side may be an end face of the elongated light emission element with regard to its longitudinal extension. The prism and the elongated light emission element may contact each other or may be spaced apart from each other. The prism may be arranged to conduct light further that is emitted from the elongated light emission element. The prism may be arranged in the middle along the longitudinal extension of the elongated light emission element. This may correspond to a middle of the bike trailer in a left-right direction. The prism may generally be arranged in the middle of the bike trailer in the left-right direction. The prism may be arranged at either end of the elongated light emission element in its longitudinal extension. This may correspond to a left or right side of the bike trailer in a left-right direction. The prism may generally be arranged on the left side or right side of the bike trailer in the left-right direction.

The illumination arrangement increases visibility of the bike trailer, in particular at night. The elongated light emission element may prevent that light emitted from the illumination arrangement is not properly visible for other traffic participants, for example those participants behind the bike trailer. For example, the elongated light emission element may have such an extension that its full light emitting surface may not accidentally be blocked by the user when standing behind the bike trailer. Loading and unloading may thus not prevent the bike trailer from being visible in darkness. For example, a section of the elongated light emitting element may extend more leftward and/or more rightward than a body of a person standing behind the bike trailer. The prism may improve visibility of the bike trailer from the side without requiring an additional light source and/or reflectors on both sides. It may also provide better illumination than just a reflector, which requires external light sources, such as from a traffic participant. However, not every traffic participant may have such a light source. For example, bikes often do not have a permanently installed light source and a bicyclist may still opt to use his bike at night even after having forgotten their light source. The illumination arrangement may be cost-effective and easy to mount. For example, the prism may be configured to comply with regulations regarding light emission angles from a rear illumination device towards the sides and upwards and downwards. Further, the prism may not require wiring, unlike an active light source, so that an overall sleek and space saving rear illumination device may be provided.

A light emitted from the rear illumination arrangement may, for example, be red. A light emitted from the front illumination arrangement may, for example, be white. The prism may protrude, in particular from the elongated light emission element and/or other parts of the bike trailer, such as a frame element. For example, the prism may be arranged on the frame element. The elongated light emission element may be recessed, in particular in other parts of the bike trailer, such as the frame element. The recessed configuration may limit light emission from the elongated light emission element to essentially one direction, for example a rearward direction.

The illumination arrangement may comprise several prisms and/or several elongated light emission elements. For example, a first prism may be arranged on a left end of the elongated light emission element and a second prism may be arranged on a right end of the elongated light emission element. For example, two elongated light emission elements may be arranged adjacent to each other along one axis, such as a left-right axis of the bike trailer. For example, there may also be a first prism, a first elongated light emission element, a second prism, a second elongated light emission element and a third prism arranged at the rear of the bike trailer in the left-right direction, in particular on a common axis and/or on a frame element. The following features and explanations for the prism and the elongated light emission element also relate to several prism and elongated light emission elements, if applicable.

According to an embodiment of the bike trailer, the prism may be configured to redirect at least part of light emitted from the elongated light emission element. For example, the prism may redirect light emitted from a section of the elongated light emission element, such as a middle section, left end section or right end section of the elongated light emission element facing rearwards. Hence, a single light source may be sufficient for both the elongated light emission element and the prism, wherein the elongated light emission element may also form such a light source. For example, the prism may be configured to not redirect at least part of light emitted from the elongated light emission element. For example, the prism may not redirect light emitted from another section of the elongated light emission element, such as a middle section, left end section or right end section of the elongated light emission element facing rearwards. Said part may be directly emitted from the elongated light emission element to be visible, for example by other traffic participants. The prism may be configured to redirect the light further in an upward direction, downward direction, left direction and/or right direction than the elongated light emission element. For example, redirected light may be emitted into another direction than light emitted from the elongated light emission element. For example, redirection and/or light emission angles of the prism may be adapted to national regulations. Unlike active light sources and/or the elongated light emission element, the light emission angles of the prism may be easily adapted by changing its geometry. For example, different prism may be provided depending on intended country of use. The prism may also be easily exchanged if the bike trailer is used in a country with different regulations. The prism may be an injection molded part.

According to an embodiment of the bike trailer, the prism and the elongated light emission element may be configured to emit light in a rearward direction of the bike trailer. The elongated light emission element may be configured to emit light partially into the prism and partially not into the prism.

According to an embodiment of the bike trailer, the prism may extend away from the elongated light emission element in an upward and/or downward and/or forward direction, in particular from a section of the elongated light emission element on which the prism is arranged. Such extensions may enhance visibility of the prism and light emitted therefrom. The prism may partially envelope the elongated light emission element and/or part of the frame of the bike trailer. An upward and downward direction may be defined by the wheels of the bike trailer, its child receptacle and/or generally the position the bike trailer is standing on the ground during use. The left direction and the right direction may be defined by a forward-facing direction. The forward direction may be opposite to the rear of the bike trailer.

According to an embodiment of the bike trailer, the elongated light emission element may be configured as a light strip. A light strip may comprise several sources of light, for example evenly distributed along the longitudinal extension and/or along a length of the light strip. When powered on, a light strip may generate and emit light, in particular at least from one side. Said side may be facing rearwards in the bike trailer and/or may form an outside surface of the bike trailer. The light strip may comprise a cover for the light sources, such as a plastic or glass cover. When using a light strip, no separate light source may be necessary for the illumination device. Further, if the light strip comprises several light sources, such as LEDs, the light strip also provides some form of redundancy. For example, if one light source fails, the light strip may still provide sufficient light for the bike trailer illumination even in conditions with difficult visibility. At least one of the light sources of the light strip may be arranged underneath the prism and/or may be facing with its light emission side towards the prism. For example, two or more of the LEDs of the light strip may be arranged underneath the prism to emit light into the prism during use.

According to an embodiment of the bike trailer, the elongated light emission element may be configured as a light guide. A light guide may be configured as an optical waveguide, for example as a glass fiber. The light guide may emit light along its entire length, for example in a continuous and/or a uniform manner. The light guide may emit light at least one side not opposite to a side in which light enters the light guide, such as a circumferential surface. The light guide may be configured to conduct light through its body. If the illumination arrangement comprises two or more light guides, at least two of those light guides may be arranged to transmit light from one to the other of the light guides.

The illumination arrangement may comprise a light source configured to illuminate the light guide. For example, the light source may be arranged to emit light on an end face of the light guide. Said light may be conducted by the light guide and emitted along a circumferential side of the light guide. The light source may be configured as an LED. The light guide may be configured to emit light along its length and/or to be illuminated from a sideways facing end by the light source. Additionally, there may be a mirror arranged at an end opposite the light source. Such a mirror may enhance brightness and/or prevent sideways light emissions from the elongated light emission element. In case of several elongated light emission elements, in particular arranged coaxially, there may be just one light source at an outermost end and a mirror at an opposite outermost end.

The light guide may be easy to integrate and cost-effective. For example, the light guide may be bendable without the risk of damaging it. The light source may be easily arranged in a separate compartment, for example protected from the environment, if a light guide is used. The light guide may provide a very uniform and gap-free light emission along its extension. Further, exchange of a damaged light source may be easier as compared to a light strip. If multiple elongated light emission elements are present, one may be a light strip and one might be a light guide.

According to an embodiment of the bike trailer, the illumination arrangement comprises a first light guide and a second light guide, in particular both arranged on the same side of the bike trailer. Such a configuration may also have some form of redundancy. One light guide may emit and thus illuminate the other light guide, for example by the two light guides having coaxial and adjacent end faces. Each light guide may also have a corresponding light source and/or may be independent of each other. Both light guides may extend along the same axis, such as a right-left axis of the bike trailer. The two light guides may be arranged adjacent to each other and/or to at least one prism.

According to an embodiment of the bike trailer, the prism may be arranged between the two light guides. One or both light guides may thus conduct light to the prism, which may be at least partially redirected by the prism. For example, the prism may be arranged in the middle in the left-right direction of the bike trailer between two coaxial light guides. One light guide may emit light towards the prism, which may partially also pass through the prism to enter the second light guide. Even if both light guides have a corresponding light source, in case of failure of one of those light sources the other light source may thus cause the prism and optionally also the other light guide to still emit light.

According to an embodiment of the bike trailer, the illumination arrangement comprises a first light source configured to illuminate the first light guide and a second light source configured to illuminate the second light guide. The illumination arrangement may comprise a common power source for both light sources, such as a battery. An electrical cable, such as a wire, connecting one of the two light sources to the power source extends from one end of the first light along both light guides to an opposite end of the second light guide. This may allow a common connection of both light sources to the power sources and/or to arrange the power source in a convenient location on the bike trailer without complicated cable routing. For example, the electrical cable may just be arranged underneath and/or on a forward-facing side of the two light guides. For example, the electrical cable may thus be arranged in the same channel in a frame element as the light sources without blocking light emission and/or without requiring a dedicated cable routing in the frame. The first light source may be arranged at the end from which the electrical cable extends along the light guides. The second light source may be arranged at the opposite end of the second light source. The two ends may be outward facing ends, such as a leftmost and rightmost end of the light guides. For example, one of the light sources may be arranged on the left side of the bike trailer adjacent the corresponding light guide and the other of the light sources may be arranged on the right side of the bike trailer adjacent the corresponding other light guide. The illumination arrangement may comprise a separate power source for each light source.

According to an embodiment of the bike trailer, the bike trailer may comprise a framework. The framework may comprise several frame elements. A frame element may be a metal part. A frame element may be an extruded aluminum profile. The framework may connect different parts of the bike trailer and provide overall structural support. The elongated light emission element and/or the prism may be attached to a frame element, in particular the same frame element, of the framework. Attachment to the framework may provide a secure and stable connection. Further, the framework connection may ensure that any illumination source remains in place and that the orientation relative to the rest of the bike trailer is maintained. Using the same frame element for prism and elongated light emission element attachment may ensure that the two elements remain in place relative to each other so that the desired light paths and/or light emission directions can be maintained. The frame element may extend in a left-right direction of the bike trailer. The frame element may be arranged at an upper back end of the bike trailer. Such a frame element may provide an attachment position that is well visible to other traffic participants. The light arrangement may also be attached to other frame elements, such as a bottom frame element or front frame element.

According to an embodiment of the bike trailer, the frame element may have a groove, in particular extending in a left right-direction and/or having an open rear side. The groove may, for example, have a circular or rectangular cross-section. The elongated light emission element may be arranged in the groove. Secure mounting may thus be easy to achieve. Further, the part of the frame element surrounding the groove may protect the elongated light emission element. The groove may have a cross-section corresponding to light guides arranged therein, optionally with the electrical cable also arranged in the groove. Both light guides and the electrical cable may be arranged in the groove. The frame element may comprise a recess for mounting of the prism. The prism may be arranged on the outside of the frame element and/or outside of the groove. The prism may be attached with a screw or rivet to the frame element. The elongated light emission element may be secured with screws, rivets, gluing, snap-connection and/or a tight fit in the groove.

According to an embodiment of the bike trailer, the frame element may connect a left frame element extending in the forward-backwards direction and right frame element extending in the forward-backwards direction. Rear wheels may be mounted to the left and right frame element. Optionally, also one or more front wheels and/or the bike may be attached to the left frame element and the right frame element. Additionally or alternatively, a rear handle of the bike trailer is attached to the frame element, for example at a left and right end of the frame element. The handle may be moveably attached to the frame element. At least in certain positions, the handle may extend further upward of the frame element.

According to an embodiment of the bike trailer, the bike trailer comprises a pocket for a power source of the illumination arrangement. The power source may be detachable, for example for charging. The power source may, for example, be a rechargeable battery. Alternatively or additionally, the power source may comprise a generator, for example connected to one of the wheels of the bike trailer so that electricity may be generated when moving the bike trailer. The pocket may have a closure, such as a zipper or Velcro flap. For example, the pocket may be arranged at a rear side of a covering for a child compartment and/or a luggage compartment at the rear side of the stroller.

According to an embodiment of the bike trailer, the illumination arrangement comprises a bracket, a first reflector and a second reflector. The bracket may form part of the rear illumination arrangement and/or may be arranged at the rear side of the bike trailer. The reflectors may be primarily rearwards facing with their reflective side. The bracket may, for example, be a plastic part, such as a molded plastic part, or a metal part. The two reflectors may be attached to the bracket, the bracket is attached to the bike trailer, in particular a wall of a rear luggage compartment. Said wall may be made from a textile or some other limp material. The bracket may ensure that the two reflectors remain in place relative to each other. Further, a larger extension of the bracket as compared to the reflectors may ensure that the two reflectors maintain a relative orientation even if attached to a limp and/or flexible part of the stroller. The rear luggage compartment may be arranged at a bottom of the stroller. The rear luggage compartment may comprise a top lid. The rear luggage compartment may be separate to a child compartment. The bracket and/or the reflectors may be arranged below the elongated light emission element and the prism in the upward-downwards direction.

The bracket may be rigid. The bracket may be flat and/or curved. The first reflector may be arranged on the left side. The second reflector may be arranged on the right. The two reflectors may be spaced apart, for example by a body section of the bracket. The bracket may form a first receptacle for attachment of the first reflector and a second receptacle for attachment of the second reflector. The two receptacles may be spaced apart in the left-right direction of the bike trailer. The bracket may primarily extend in the left-right direction. The reflector may be visible from the rear side of the bike trailer. The reflectors may be rearward facing. The reflectors may be attached to the receptacles with a snap-connection, gluing, screwing or other attachment means.

According to an embodiment of the bike trailer, the illumination arrangement may be configured to automatically turn on and/or off. For example, the illumination arrangement may power on any light source depending on a time, depending on a measured environmental brightness and/or depending on a movement of the bike trailer. For example, the illumination arrangement may comprise an accelerometer. The light sources may be powered down, for example, if the bike trailer is standing in place for longer than a predetermined time and/or when the environmental brightness has exceeded a threshold value. Sufficient illumination may thus be ensured without the user being required to manually control the illumination arrangement.

According to an embodiment of the bike trailer, the illumination arrangement may be configured to control an illumination depending on a braking of the bike trailer. For example, if a brake of the bike trailer is actuated, light sources may be controlled to generate light with a higher intensity and/or to pulse between two brightness settings. The illumination arrangement may thus notify other traffic participants of a deceleration of the bike trailer. The rear illumination arrangement may form a brake light for the bike trailer.

According to an embodiment of the bike trailer, the elongated light emission element may emit light with a different intensity along its length. For example, light may be emitted with a higher intensity in a section under the prism and/or a section that is arranged to emit light into the prism. For that purpose, the LEDs of a light strip under the prism may be stronger than LEDs not arranged under the prism. For that purpose, a light guide may be configured to let more light pass through its surface to the outside in a section under the prism than a section not arranged under the prism. The prism may thus be illuminated particularly brightly.

According to an embodiment of the bike trailer, the prism is configured to emit light to the sides with at least an angle of ±110° and/or up-down with ±10°. Such a prism may comply with light distribution regulations particularly well.

A second aspect may relate to a bike trailer. The bike trailer may comprise an illumination arrangement with a bracket, a first reflector and a second reflector. The two reflectors may be attached to the bracket. The bracket may be attached to the bike trailer, in particular a wall of a rear luggage compartment. The illumination device may only comprise reflecting elements and no light sources. In an embodiment of the bike trailer according to the second aspect, the bike trailer may be configured as the bike trailer according to the first aspect. Embodiments, examples and features of the first aspect constitute embodiments, examples and features of the second aspect and vice-versa.

Further embodiments and features may be taken from the following item list:
1. Bike trailer,
   comprising an illumination arrangement with a bracket, a first reflector and a second reflector,
   wherein the two reflectors are attached to the bracket and
   wherein the bracket is attached to the bike trailer, in particular a wall of a rear luggage compartment.
2. Bike trailer according to item 1,
   wherein the illumination arrangement comprises an elongated light emission element and a prism arranged to be illuminated by light emitted from the elongated light emission element.
3. Bike trailer according to item 1 or 2,
   wherein the bracket is attached to a limp part of the bike trailer, such as a textile wall of the rear luggage compartment.
4. Bike trailer according to any one of the preceding items,
   wherein the bracket is rigid.
5. Bike trailer according to any one of the preceding items,
   wherein the bracket extends in the left-right direction of the bike trailer.
6. Bike trailer according to any one of the preceding items,
   wherein the bracket forms a first receptacle for attachment of the first reflector and a second receptacle for attachment of the second reflector,
   in particular wherein the two receptacles are spaced apart in the left-right direction of the bike trailer.
7. Bike trailer according to any one of the preceding items,
   wherein the illumination arrangement is configured as a rear illumination arrangement.
8. Illumination arrangement for a bike trailer,
   the illumination arrangement comprising a bracket, a first reflector and a second reflector,
   wherein the two reflectors are attached to the bracket and
   wherein the bracket is attached to the bike trailer, in particular a wall of a rear luggage compartment.

A third aspect relates to an illumination arrangement for a bike trailer, for example configured as a rear illumination arrangement. The illumination arrangement may be configured as the illumination arrangement of the bike trailer according to the first and/or second aspect. Embodiments, examples and features of the first and second aspect constitute embodiments, examples and features of the third aspect and vice-versa. For example, the illumination arrangement may comprise an elongated light emission element and a prism arranged to be illuminated by light emitted from the elongated light emission element. The elongated light emission element and/or the prism may be configured for attachment to a frame element of a framework of the bike trailer. Alternatively or additionally, the illumination arrangement may comprise a bracket, a first reflector and a second reflector, wherein the two reflectors may be attached to the bracket and wherein the bracket may be attached to the bike trailer, in particular a wall of a rear luggage compartment

Other features of the present invention will be apparent from consideration of the information contained above as well as in or in combination with the following detailed description, drawings, and claims. The present invention is illustrated by way of example, and not by way of limitation, in the figures of the accompanying drawings.

### BRIEF DESCRIPTION OF FIGURES

- Fig. 1: shows, in a schematic front perspective view, a bike trailer configured as a child carrier.
- Fig. 2: shows, in a schematic rear perspective view, a child carrier of Fig. 1.
- Fig. 3: shows, in a schematic exploded view, parts of a rear illumination arrangement of the child carrier of Fig. 1.
- Fig. 4: shows, in a schematic perspective view, parts of the rear illumination arrangement of Fig. 3.
- Fig. 5: shows, in a schematic front perspective view, a prism of the rear illumination arrangement of Fig. 3.
- Fig. 6: shows, in a schematic side view, the prism of Fig. 5.
- Fig. 7: show, in a schematic rear perspective view, the prism of Fig. 5.
- Fig. 8: shows, in a schematic sectional view, the parts of the rear illumination arrangement of Fig. 3.
- Fig. 9: shows, in a rear perspective view, details of the child carrier of Fig. 1.
- Fig. 10: shows, in a schematic exploded view, other parts of the rear illumination arrangement of the child carrier of Fig. 1.
- Fig. 11: shows, in a schematic rear perspective view, the parts of the rear illumination arrangement of Fig. 10.
- Fig. 12: illustrates, in a schematic perspective view, a first embodiment of the parts of a rear illumination arrangement shown in Fig. 3.
- Fig. 13: illustrates schematically the electrical wiring of the embodiment according to Fig. 12.
- Fig. 14: illustrates how a power source of the rear illumination arrangement can be stored in a rear pocket on the child carrier of Fig. 1.
- Fig. 15: illustrates, in a schematic perspective view, a second embodiment of the parts of a rear illumination arrangement shown in Fig. 3.
- Fig. 16: illustrates different embodiments of the prism.

### DETAILED DESCRIPTION OF EMBODIMENTS

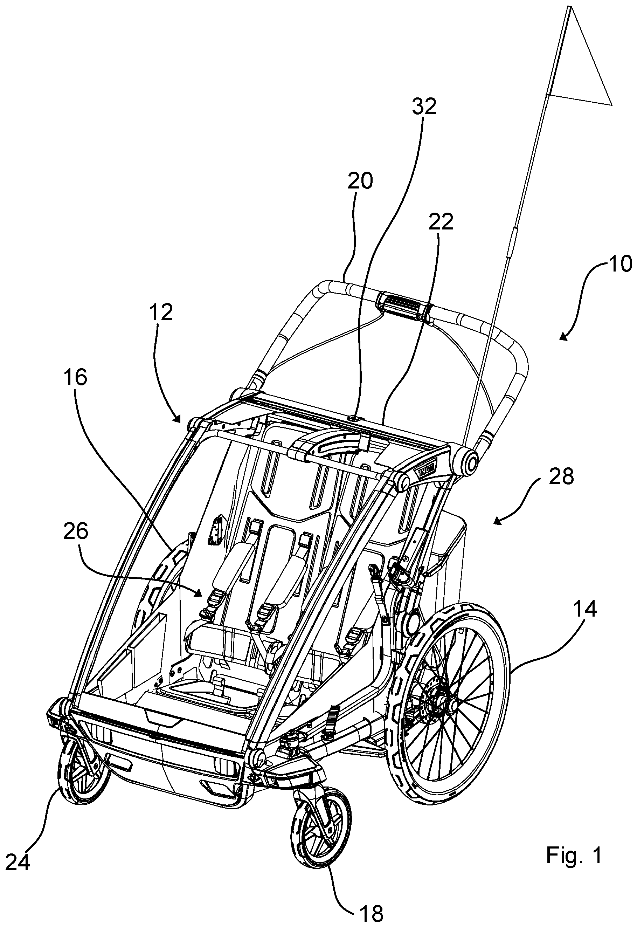

Fig. 1 shows a bike trailer configured as a child carrier 10. In Fig. 1, the child carrier 10 is adjusted into a stroller configuration and means for attachment to a bicycle are not shown. The child carrier 10 comprises a framework 12. At a lower back side, a left back wheel 14 and a right back wheel 16 are rotatably attached to the framework 12. At an upper back end, a handle 20 for pushing the child carrier 10, for example when strolling or jogging, is attached to the framework 12. The upper rear corner of the framework 12 is formed by a frame element 22 that extends in a left-right direction of the child carrier 10. The handle 20 is rotatably attached to this frame element 22. The child carrier 10 also comprises a suspension. At the front, the front wheels 18 and 24 are attached to the framework 12. The child carrier 10 can be adjusted into a bike trailer configuration by lifting the front wheels 18, 24 away from the ground and attaching a bar to the front of the child carrier 10 that allows the child carrier 10 to be pulled by a bicycle.

The framework 12 limits a child compartment 26. The child compartment 26 is further limited by a textile wall element that may form a hood for the child compartment 26, that is attached to the framework 12 and that is not shown in Fig. 1. A child seat is arranged in the child compartment 26, which also comprises seatbelts for securing the child in a seated position. Alternatively, the child carrier 10 may comprises an infant basket, which may also be attached to the middle of the framework 12. The child seat and/or infant basket may be removably attached to carry a child or infant independently of the child carrier 10 and to reconfigure the child carrier 10 when the child gets older. Further, the framework 12 and/or the child carrier 10 may be collapsible, for example for storage and transport in a vehicle. At the rear, the child carrier 10 has a rear luggage compartment 28 arranged behind the child compartment 26 and attached to the framework 12, which will be described further below. The child compartment 26 and the rear luggage compartment 28 are separate to each other.

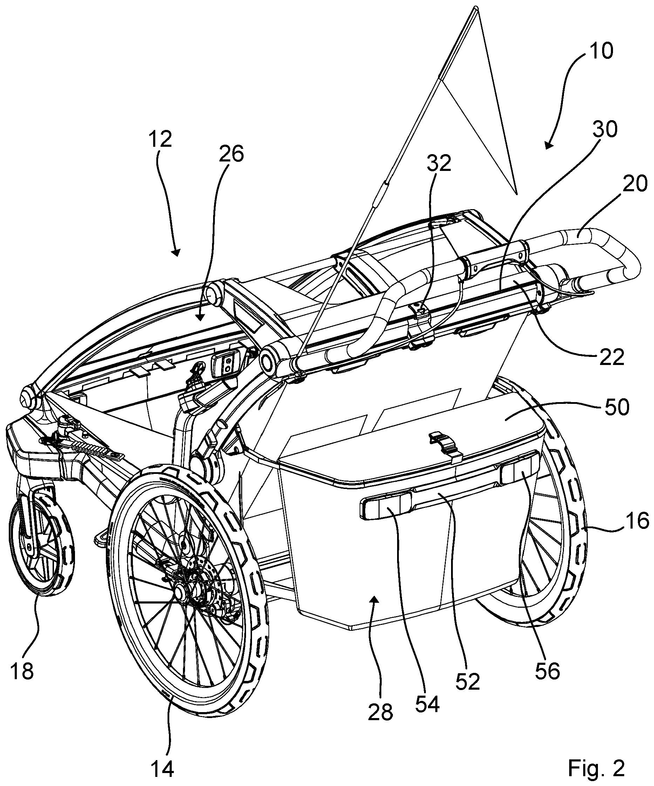

Fig. 2 shows the child carrier 10 in a rear perspective view. As can be seen in Fig. 2, the child carrier 10 comprises an illumination arrangement configured in this example as a rear illumination arrangement. The rear illumination arrangement comprises a lower part that passively illuminates the child carrier 10 by providing additional light reflective means. The rear illumination arrangement comprises an upper part that actively illuminates the child carrier 10 by generating and emitting light. The rear illumination arrangement of the child carrier 10 may also only comprise either the lower or the upper part.

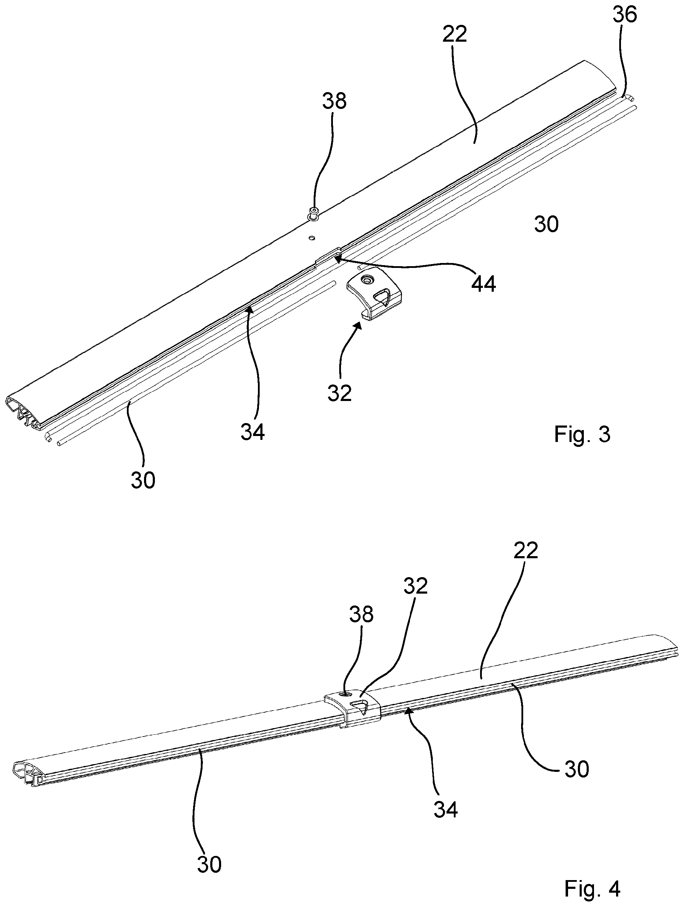

Fig. 3 illustrates some of the components of the upper part of the rear illumination arrangement. The rear illumination arrangement comprises two elongated light emission elements 30 and a prism 32 arranged to be illuminated by light emitted from the elongated light emission elements 30. The prism 32 is arranged on the rear side between the two elongated light emission elements 30 in the middle of the left-right direction. Light emitted from a section of each of the two elongated light emission elements 30 facing the prism 32 and/or being covered by the prism 32 is redirected so that more light is emitted towards the left side, the right side, upwards and downwards. For that purpose, the prism 32 protrudes from the elongated light emission elements 30 and the frame element 22. Further, the prism 32 has angled surfaces to refract the light entering a body of the prism 32 in those directions. By comparison, the elongated light emission elements 30 primarily emit light in a rearward direction.

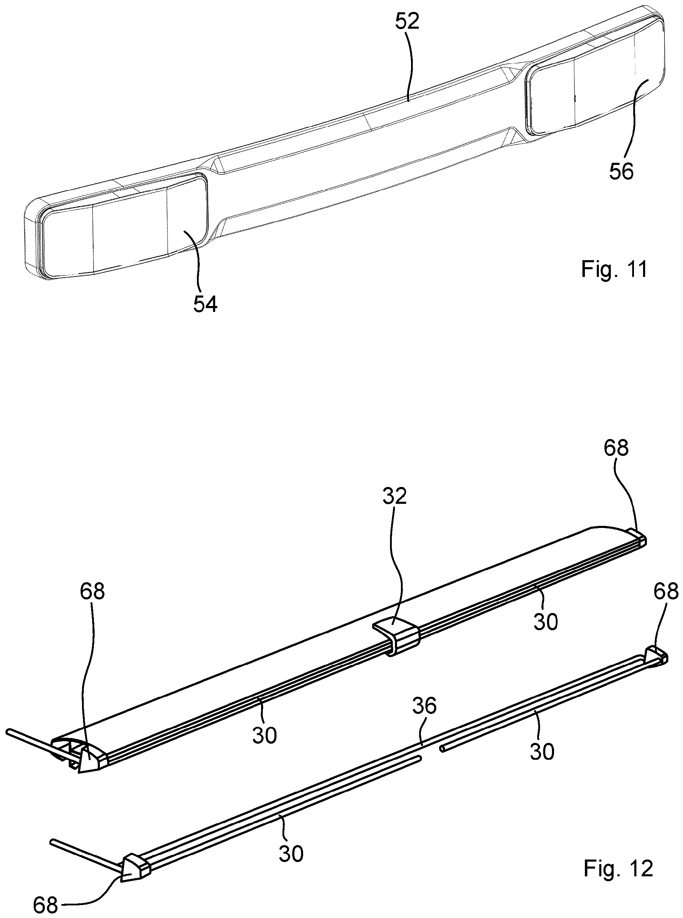

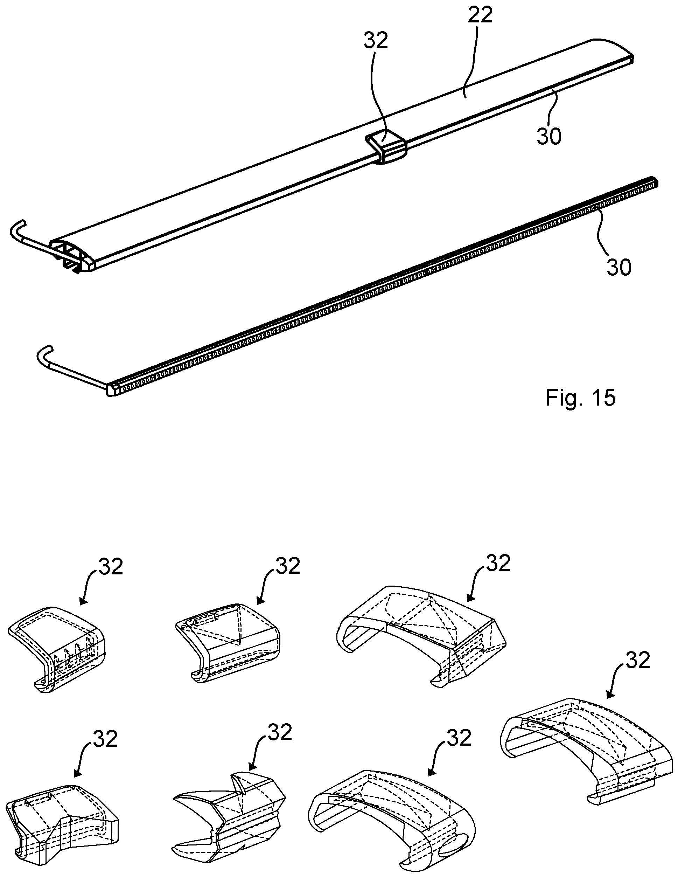

As can be taken from Fig. 3 and Fig. 4, the elongated light emission elements 30 are arranged in a groove 34 of the frame element 22 for their attachment to the frame element 22. An open side of the groove 34 faces rearward in the child carrier 10. An electrical cable 36 for a light source 68 of the upper part of the rear illumination arrangement is also arranged in the groove 34, in the present example in a forward direction underneath the elongated light emission elements 30. Light sources 68 are shown in the embodiments of Fig. 12 and Fig. 15.

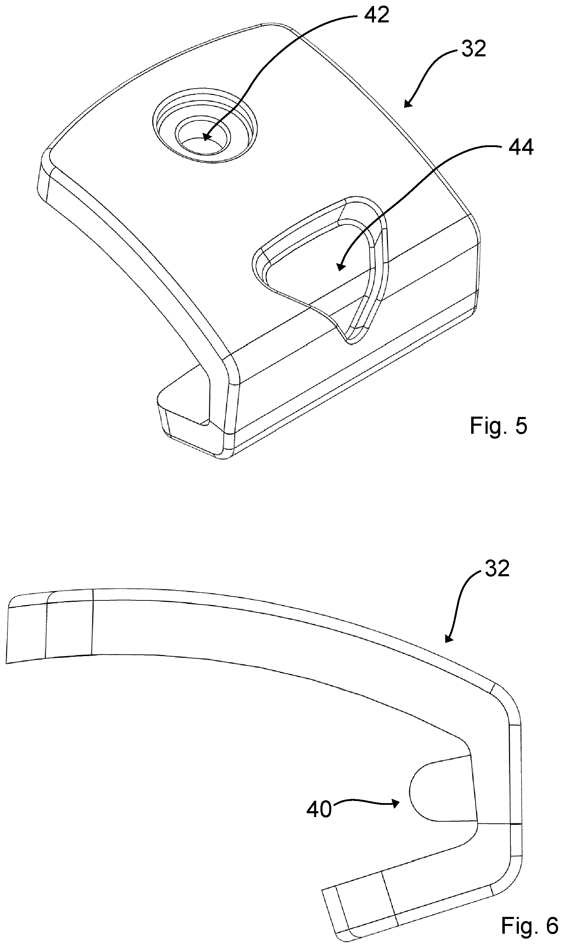

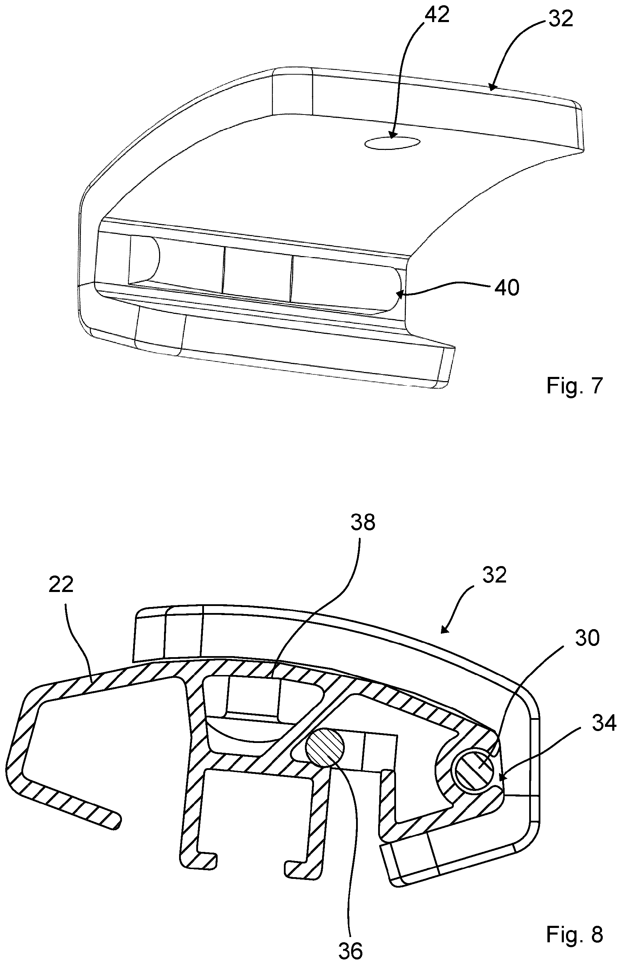

The prism 32 is clipped to the frame element 22 in a correspondingly shaped recess 44. Further, the prism 32 is secured with a rivet 38. The geometry of the prism 32 can be taken from Figs. 5 to 7. As can be seen in Fig. 6, a forward-facing side of the prism 32 has a protrusion 40 that secures a position of the prism 32 in the recess 44 and conducts light from the elongated light emission element 30 into the body of the prism 32. Further, a top side of the prism 32 has a through hole 42 for the rivet 38. A rearward facing side of the prism 32 has a recess 44 with angled surfaces that emit light having entered the prism 32 at a concentrated area for even better visibility. Alternatively or additionally, the recess 44 may cause more light distribution to the sides and/or upwards. The body of the prism 32 extends slightly downwards and forwards as well as a larger distance upwards and forwards from the groove 34 and recess 44. The prism 32 thus partially surrounds the frame element 22. This arrangement and the shape of the groove 34 can be seen in the sectional view of Fig. 8. In Fig. 8, the electrical cable 36 is arranged differently in that it is not arranged in the groove 34 in which the elongated light emission elements 30 are arranged.

Fig. 16 shows other embodiments of the prism 32. In those embodiments, the geometry of the body of the prism 32 is differently shaped, which may cause a different light distribution. Further, the three examples of the prism 32 shown in the right of Fig. 16 extend all the way along the top of the frame element 22 towards a front side of the frame element 22. At least those prisms 32 may be attached to the frame element 22 by clipping to the frame element 22 only without further fixation with the rivet 38. A light distribution by the prism 32 is determined by an outer shape as well as by internal shapes. Typical, flat angles, V-shapes and/or patterns on outer and inner surfaces of the prism 32 are used to design the light distribution. A part of the prism 32, such as the protrusion 40, may be arranged in the groove 34 to catch light also from inside the groove 34. The frame element 22 may also comprise additional holes and/or the groove 34 may comprise additional openings to let light enter into the prism 32, for example on a top side of the frame element 22.

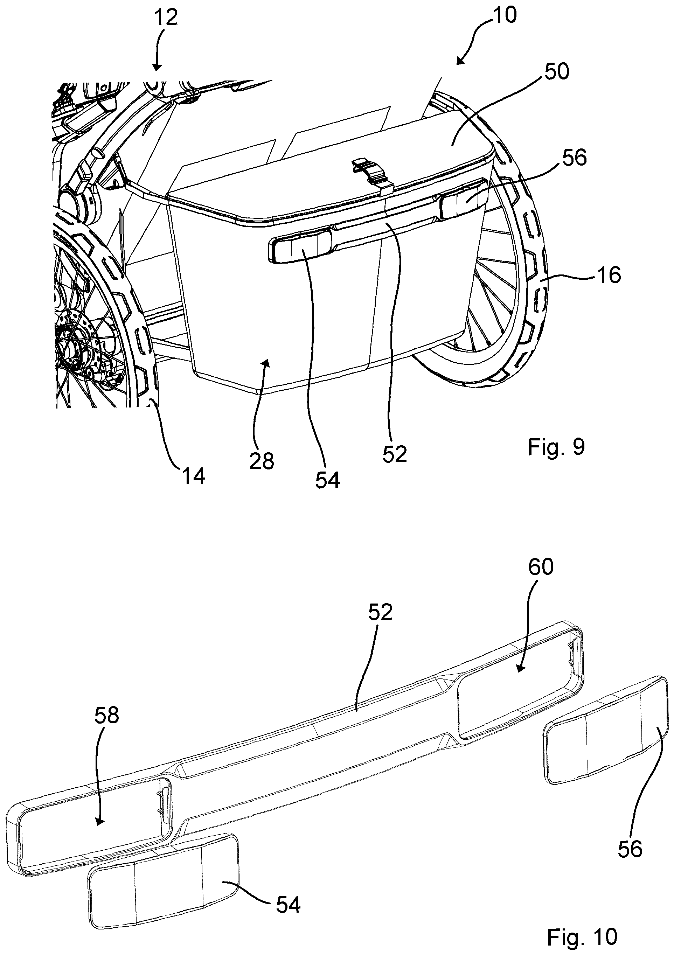

Fig. 9 shows the rear luggage compartment 28 in greater detail. The rear luggage compartment 28 is formed by a frame on which a limp textile luggage compartment wall is tensioned. The rear luggage compartment 28 has a lid 50. The lower part of the rear illumination arrangement comprises a bracket 52, a first reflector 54 and a second reflector 56. The bracket 52 is a flat rigid plastic part that follows the curvature of the rear wall of the rear luggage compartment 28 and is attached thereto. The curved shape of the bracket 52 also causes the reflectors 54, 56 to face slightly outward and away from each other, although an attachment with a different orientation is possible. The bracket 52 thus also essentially extends in the left-right direction of the child carrier 10. The first reflector 54 is a left reflector and the second reflector 56 is a right reflector. The bracket 52 forms a first receptacle 58 for attachment of the first reflector 54 and a second receptacle 60 for attachment of the second reflector 56. The two receptacles 58, 60 are spaced apart in the left-right direction of the child carrier 10 by a middle section of the bracket 52. Both receptacles 58, 60 are configured for a snap-connection of the corresponding reflector 54, 56. For this purpose, the bracket 52 has a protrusion in each receptacle 58, 60, as can be seen in the exploded view of Fig. 10. The reflectors 54, 56 are configured as so-called cat-eyes in the presently shown example.

Fig. 12 illustrates further details of a first embodiment of the upper part of the rear illumination arrangement. Each elongated light emission element 30 is configured as a light guide, for example as a glass fiber. The two elongated light emission elements 30 are arranged coaxial to each other. At an outer sideways facing end, i.e. a left end and a right end, a corresponding light source 68 is arranged. The light sources 68 independently generate light that enters the light guides. The light guides conduct part of the light into the prism 32 and also emit part of the light along its longitudinal direction at least in the rearward direction of the child carrier 10. The light sources 68 may also be configured to provide sufficient light to illuminate both light guides in the case one of the light sources 68 malfunctions. In that case, light may be conducted from one of the light guides into the prism 32 and from the prism 32 arranged between the two light guides into the other of the light guides.

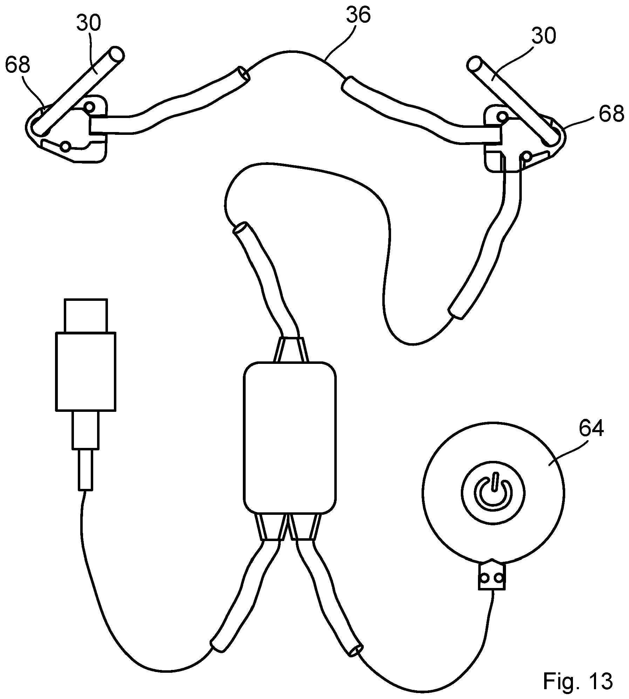

The rear illumination arrangement comprises a common power source 62 in the form of a battery for both light sources 68. The electrical cable 36 connecting one of the two light sources 68 to the power source 62 extends from one end of the first light guide along both light guides to an opposite end of the second light guide. The electrical cable 36 thus extends on forward-facing side and thus underneath the two light guides, as can be seen in the right part of Fig. 12. Fig. 13 illustrates the electrical connection. As can be taken from Fig. 13, both light sources 68 may be connected together to the power source 62, for example with a USB-connector. Further, the rear illumination arrangement comprises a switch 64 for turning the light sources 68 on and off.

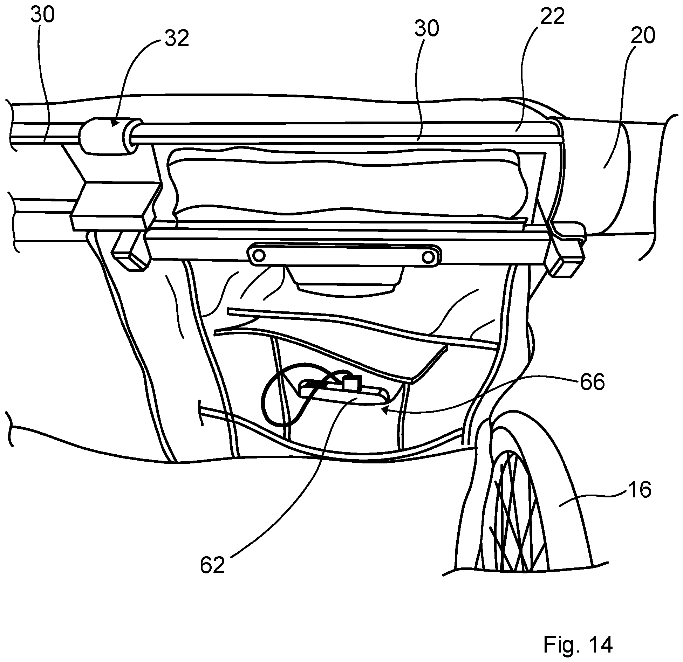

The power source 62 is shown in Fig. 14. As can be seen, the child carrier 10 may optionally comprise a pocket 66 for the power source 62. In the shown example, the pocket 66 is arranged outside on a rear wall of the child compartment 26. The pocket 66 has a Velcro closure in the shown example. The pocket 66 is thus easily accessible. The power source 62 is removably connected to the rest of the rear illumination arrangement. The user may thus remove the power source 62 and take it with him for recharging.

Fig. 15 illustrates further details of a second embodiment of the upper part of the rear illumination arrangement. Only differences will be detailed here. In the second embodiment, there is only one elongated light emission element 30, although there may be two similarly arranged as in the first embodiment. Since there is only a single elongated light emission element 30, no electrical cable 36 in the groove 34 is required. The single elongated light emission element 30 is configured as a light strip with LEDs as light sources arranged with regular spacing along its longitudinal length in the left-right direction. In the area of the prism 32, the light strip is also free of a cover for the light sources, although such a cover may be present in other embodiments. Since the elongated light emission element 30 forms the light sources in the second embodiment, the second embodiment has no separate light sources arranged at the outer end of the frame element 22. The LEDs arranged underneath the prism 32 emit their light into the prims 32 for redirection by the prism 32.

## Claims

1. Bike trailer (10)
comprising an illumination arrangement,
wherein the illumination arrangement comprises an elongated light emission element (30) and a prism (32) arranged to be illuminated by light emitted from the elongated light emission element (30).

2. Bike trailer (10) according to claim 1,
wherein the prism (32) is configured to redirect at least part of light emitted from the elongated light emission element (30),
in particular wherein the prism (32) is configured to redirect the light further in an upward direction, downward direction, left direction and/or right direction.

3. Bike trailer (10) according to claim 2 or 3,
wherein the prism (32) and the elongated light emission element (30) are configured to emit light in a rearward direction of the bike trailer (10).

4. Bike trailer (10) according to any one of the preceding claims,
wherein the prism (32) extends away from the elongated light emission element (30) in an upward and/or downward and/or forward direction
and/or
wherein the elongated light emission element (30) extends in the left-right direction of the bike trailer (10).

5. Bike trailer (10) according to any one of the preceding claims,
wherein the elongated light emission element (30) is configured as a light strip, in particular comprising several light sources arranged along its length.

6. Bike trailer (10) according to any one of the preceding claims 1 to 4,
wherein the elongated light emission element (30) is configured as a light guide and wherein the illumination arrangement comprises a light source (68) configured to illuminate the light guide,
in particular wherein the light guide is configured to emit light along its length and/or to be illuminated from a sideways facing end by the light source (68).

7. Bike trailer (10) according to claim 6,
wherein the illumination arrangement comprises a first light guide (30) and a second light guide (30),
in particular extending along the same axis, such as a right-left axis of the bike trailer (10).

8. Bike trailer (10) according to claim 7,
wherein the prism (32) is arranged between the two light guides (30).

9. Bike trailer (10) according to claim 7 or 8,
wherein the illumination arrangement comprises a first light source (68) configured to illuminate the first light guide (30) and a second light source (68) configured to illuminate the second light guide (30),
in particular wherein the illumination arrangement comprises a common power source (62), such as a battery, for both light sources (68), wherein an electrical cable (36) connecting one of the two light sources (68) to the power source (62) extends from one end of the first light guide (30) along both light guides (30) to an opposite end of the second light guide (30).

10. Bike trailer (10) according to any one of the preceding claims,
wherein the bike trailer (10) comprises a framework (12),
wherein the elongated light emission element (30) and/or the prism (32) are attached to a frame element (22), in particular the same frame element (22), of the framework (12).

11. Bike trailer (10) according to claim 10,
wherein the frame element (22) has a groove (34), in particular extending in a left right-direction and/or having an open rear side,
wherein the elongated light emission element (30) is arranged in the groove (34).

12. Bike trailer (10) according to claim 10 or 11,
wherein the frame element (22) connects a left frame element (22) extending in the forward-backwards direction and right frame element (22) extending in the forward-backwards direction
and/or
wherein a rear handle (20) of the bike trailer (10) is attached to the frame element (22).

13. Bike trailer (10) according to any one of the preceding claims,
wherein the bike trailer (10) comprises a pocket (66) for a power source (62) of the illumination arrangement.

14. Bike trailer (10) according to any one of the preceding claims,
wherein the illumination arrangement comprises a bracket (52), a first reflector (54) and a second reflector (56),
wherein the two reflectors (54, 56) are attached to the bracket (52) and
wherein the bracket (52) is attached to the bike trailer (10), in particular a wall of a rear luggage compartment (28).

15. Illumination arrangement for a bike trailer (10)
comprising an elongated light emission element (30) and a prism (32) arranged to be illuminated by light emitted from the elongated light emission element (30).
